# EUROPÄISCHE PATENTSCHRIFT

(11) **EP 1 951 144 B1**
(45) Veröffentlichungstag und Bekanntmachung des Hinweises auf die Patenterteilung: **08.01.2014**
(21) Anmeldenummer: 06818532.1
(22) Anmeldetag: 14.11.2006
(51) Int. Cl.: A61C 5/06, A61C 5/04

(54) **OBTURATIONSVORRICHTUNG ZUR VERBLOCKUNG EINER APIKALEN ÖFFNUNG EINES WURZELKANALS EINES ZAHNES**
OCCLUSION DEVICE FOR BLOCKING AN APICAL OPENING OF A ROOT CANAL OF A TOOTH
DISPOSITIF D'OBTURATION POUR LE BLOCAGE D'UNE OUVERTURE APICALE DU CANAL DE RACINE D'UNE DENT

(30) Priorität: 14.11.2005 DE 102005054232
(43) Veröffentlichungstag der Anmeldung: 06.08.2008
(73) Patentinhaber: Coltène/Whaledent GmbH + Co. KG, 89129 Langenau (DE)
(72) Erfinder: MÜLLER, Barbara, 89129 Langenau (DE); MANNSCHEDEL, Werner, 89129 Langenau (DE)
(74) Vertreter: Forstmeyer, Dietmar
(86) Internationale Anmeldenummer: PCT/EP2006/010920
(87) Internationale Veröffentlichungsnummer: WO 2007/054370

(56) Entgegenhaltungen:
- WO-A-93/16653
- DE-C- 102 299
- DE-U1- 20 017 314
- GB-A- 734 983

## Beschreibung

Die Wurzelkanalbehandlung erfordert sterile Aufbereitungsvorrichtungen für den Wurzelkanal und schließlich eine Verblokkung der apikalen Öffnung des Wurzelkanals, bei der die Gefahr des Einschleppens von Bakterien und/oder Toxinen besteht, so dass das Risiko von postendodontischen Komplikationen, wie apikale Osteolyse oder akute periapikale Ostitis äußerst durch die Verblockung vermindert wird.

Herkömmlich wird die apikale Öffnung mit Dentinpartikeln verblockt. Das verhindert das Überstopfen des Wurzelkanals bei der anschließenden Abfüllung mit Dichtmaterial, auch "Sealer" genannt, und einem Füllmaterial wie Guttapercha. Jedoch besteht bei der Verblockung mit Dentinpartikeln die Gefahr, dass zwischen den Dentinpartikeln Bakterien vorhanden sind, die eine erneute Infektion hervorrufen können.

Ein unter dem Namen "Simplyfill" vertriebenes Obturationssystem arbeitet mit Guttapercha zur Verblockung der apikalen Öffnung. Dazu ist das Guttapercha-Material auf einen Träger aufgeschraubt, der längsverschieblich ist und der ein Hilfswerkzeug für die Verblockung darstellt. Ein Nachteil dieses Obturationssystems ist es, dass nach der Platzierung bzw. der Applizierung des Guttapercha-Materials in der apikalen Öffnung der Träger von dem Guttapercha-Material herunter zu schrauben ist. Dabei besteht nachteilig die Gefahr, dass sich das Guttapercha-Material beim Abschrauben des Trägers verschiebt und eine sichere Verblockung der apikalen Öffnung gefährdet ist und ein Eindringen von Bakterien nicht zuverlässig verhindert werden kann.

Aufgabe der Erfindung ist es, eine Obturationsvorrichtung zu schaffen, die ein sicheres Applizieren eines Obturationsmaterials in der apikalen Öffnung ermöglicht und das die Nachteile bekannter Obturationssysteme überwindet. Ferner ist es Aufgabe der Erfindung, einen Applikator für das Verblocken zu schaffen, der multifunktional einsetzbar ist.

Gelöst wird diese Aufgabe mit dem Gegenstand des unabhängigen Anspruchs 1. Eine Vorrichtung gemäß dessen Oberbegriff Lehrt die WO 93/16653 A. Vorteilhafte Weiterbildungen der Erfindung ergeben sich aus den abhängigen Ansprüchen.

Erfindungsgemäß wird eine Obturationsvorrichtung zur Verblokkung einer apikalen Öffnung eines Wurzelkanals eines Zahnes mittels einer Obturationsstopfenmasse geschaffen. Dazu weist die Obturationsvorrichtung einen Träger auf, bei dem die Obturationsstopfenmasse gleitverschieblich angeordnet ist. Ferner weist die Obturationsvorrichtung einen Applikator auf, mit dem die Obturationsstopfenmasse in Form eines Obturationsstopfens in die apikale Öffnung appliziert wird, wobei der Applikator ein Gehäuse mit einem Schiebemechanismus aufweist, der mit dem Träger in Eingriff bringbar ist, und wobei der Schiebemechanismus die Obturationsstopfenmasse von dem Träger in die apikale Öffnung schiebt.

Eine derartige Obturationsvorrichtung hat den Vorteil, dass sie auf der Gleitverschieblichkeit eines Schiebemechanismus basiert, wobei von einem Träger aus der Obturationsstopfen in die apikale Öffnung geschoben wird, sodass keine Schraubverbindung zwischen Träger und Guttaperchastopfen erforderlich ist. Es besteht folglich nicht mehr die Gefahr, dass bei dem Entfernen des Trägers von dem Stopfen ein Drehmoment auf den Stopfen einwirkt und ein Lockern oder Verdrehen des Stopfens die Zuverlässigkeit der Verblockung der apikalen Öffnung gefährdet. Vielmehr kann in vorteilhafter Weise ein Stössel, der mit Hilfe des Schiebemechanismus in Richtung auf die Obturationsstopfenmasse des Trägers aus dem Applikator ausgefahren wird, unmittelbar nach der Verblockung der apikalen Öffnung zurückgezogen werden, ohne die Verblockung durch Krafteinwirkung zu belasten oder die Verblockung zu lockern.

Der Applikator kann mit einer Vielzahl von Funktionen ausgestattet werden, so dass er beispielsweise eine variable Stopperfunktion, eine Kalibrierungsfunktion und/oder eine Skalierung und Messfunktion aufweist, um z.B. vorbestimmte Zahnwurzeltiefen mit dem Träger und der Obturationsstopfenmasse bzw. dem Obturationsstopfen - im weiteren Obturationsstopfen genannt - zuverlässig und nachprüfbar zu erreichen. So kann z.B. die Tiefe des Wurzelkanals gemessen und/oder die Position des Obturationsstopfens im Wurzelkanal bestimmt werden.

Besonders bevorzugt ist die Obturationsstopfenmasse ein vorgefertigter Obturationsstopfen, der bei der Verarbeitungstemperatur, vorzugsweise Raum- oder Körpertemperatur, fest ist. Dieser Obturationsstopfen wird mit der erfindungsgemäßen Obturationsvorrichtung ohne Erwärmung des Obturationsstopfens, wodurch die Viskosität bzw. die Härte des Guttapercha Materials des Obturationsstopfens verändert würde, direkt in einen präparierten Wurzelkanal eingebracht. Entsprechend weist die Obturationsvorrichtung keine Wärmequelle auf. So kann vorteilhaft ein Obturationsstopfen verwendet werden, der den Dimensionen des Wurzelkanals angepasst. ist, z.B. bezüglich der Tiefe des Wurzelkanals oder bezüglich einer besonderen Form, die durch die Präparation vorgegeben ist. Da der Obturationsstopfen bei Einbringung in einen Wurzelkanal, insbesondere den Apex eines Wurzelkanals, vorzugsweise nicht erhitzt wird oder durch Reibung etc. bei der Ausbringung aus der Obturationsvorrichtung nur unwesentlich erhitzt wird, ändert sich seine Form dabei nicht. Dadurch kann eine definierte Obturation des Wurzelkanals bzw. des Apex erreicht werden. Eine derartige definierte Obturation ist mit Obturationsmassen nicht möglich, die vor oder bei Ausbringung so erhitzt werden, dass sich ihre Form bei Einbringung in den Wurzelkanal ändert.

Für ein schnelles Wechseln des Trägers mit Obturationsstopfen haben sich bei einer bevorzugten Ausführungsform der Erfindung Steckverbindungen mit einem Konus bewährt. Dazu weist der Träger auf einem proximalen Ende ein Mundstück auf und auf einem distalen Ende einen Verbindungsansatz in Form eines Konus, der auf ein proximales Ende des Applikators aufsteckbar ist. Prinzipiell ist es auch möglich, an dieser Stelle zwischen proximalem Ende des Applikators und distalem Ende des Trägers eine Schraub- oder Bajonettverbindung vorzusehen. Die Bajonettverbindung hat den Vorteil, dass mit wenigen Handgriffen eine lösbare Verbindung zustande kommt, die jedoch besser gesichert ist als eine reine haftschlüssige Verbindung mit Hilfe eines Konus am Verbindungsansatz des Trägers. Das Mundstück am proximalen Ende des Trägers ist vorzugsweise an die Größe und Form des jeweiligen Obturationsstopfens angepasst. Insbesondere die lichte Weite des Mundstücks entspricht dabei den Außenmaßen des Obturationsstopfens.

Vorzugsweise ist der Obturationsstopfen in dem Träger angeordnet. Das hat einerseits den Vorteil, dass der Obturationsstopfen mitsamt dem Träger sicher und steril gelagert werden kann und andererseits den Vorteil, dass nach Einführung des Trägers in den Wurzelkanal mit Hilfe des Schiebemechanismus des Applikators der Obturationsstopfen aus dem Mundstück geführt herausgeschoben werden kann, um die apikale Öffnung zu verblocken.

Das Obturationsstopfenmaterial umfasst vorzugsweise Guttapercha, da hier gegenüber einem Obturationsstopfenmaterial aus Dentinpartikeln die Bakterienfreiheit gewährleistet werden kann. Mit Hilfe der Applikationsvorrichtung kann neben vorgeformtem festen Material auch Material in Granulatform oder pastöses Material appliziert werden. Dies könnte dann in einer nachfolgenden Reaktion am Apex aushärten oder polymerisieren. Hoch pastöses Material hätte den Vorteil, daß es sich adaptiert aber nicht über den Apex hinausfließt. Das Obturationsstopfenmaterial kann weiterhin übliche Zusätze enthalten, wie z.B. ein Röntgenkontrastmittel, um die genaue Position des Obturationsstopfens im Wurzelkanal bestimmen zu können. Insbesondere kann ein Obturationsstopfen aus Guttapercha-Material an seinem proximalen Ende eine Spitze aufweisen. Die Länge 1 des Obturationsstopfens hängt von der Größe des Wurzelkanals bzw. der Größe der apikalen Öffnung ab und liegt vorzugsweise in einem Bereich von 0,1 mm bis 10 mm, vorzugsweise im Bereich von 1 mm bis 5 mm. Vorzugsweise weist der Obturationsstopfen eine zylindrische Kontur auf. Dieses gilt insbesondere für Obturationsstopfen von großen Längen im Bereich von 10 mm.

Alternativ kann der Obturationsstopfen einen konusförmigen Stopfen mit einer Steigung wahlweise von 4% bis 10% aufweisen. Eine solche konusförmige Steigung kommt der Geometrie des Wurzelkanals entgegen, der sich üblicherweise konisch zur apikalen Öffnung hin verjüngt. Für den Einsatz insbesondere von Guttapercha-Spitzen für das Verblocken der apikalen Öffnung werden vorzugsweise Querschnitte einer ISO-Norm eingesetzt. Eine weitere bevorzugte Form für den Obturationsstopfen weist eine stufenförmige Außenkontur auf. Dabei sind die Stufen an den Innendurchmesser des Mundstücks am proximalen Ende des Trägers angepasst, während die Obturationsstopfenspitze außerhalb des Trägers einen Ansatz aufweisen kann, der mit seinem Durchmesser dem Außendurchmesser des Mundstücks angepasst ist. Dieses hat den Vorteil, dass ein optimaler kontinuierlicher Übergang von der Guttapercha-Spitze auf das Mundstück des Trägers geschaffen wird, so dass ohne Verletzung des Wurzelkanals das Mundstück durch den Wurzelkanal bis zur apikalen Öffnung geführt werden kann.

Die nachfolgenden Merkmale beziehen sich hauptsächlich auf den Applikator und seine unterschiedliche Funktionen, sowie Vorzüge und Vorteile der Ausführungsformen des Applikators.

In einer nicht zur Erfindung gehörenden Ausführungsform weist der Applikator ein langgestrecktes, rohrförmiges Gehäuse auf. In dem rohrförmigen Gehäuse wird ein Stössel geführt, der von außen betätigbar ist und in Längserstreckung entlang der Symmetrieachse des langgestreckten, rohrförmigen Gehäuses verschoben werden kann. In dem Gehäuse kann außer dem Stössel des Schiebemechanismus ein Rückstellelement angeordnet sein. Dieses Rückstellelement sorgt dafür, dass nach Einschieben und Einpressen des Guttapercha-Stopfens in die apikale Öffnung des Wurzelkanals der Stössel selbsttätig federelastisch zurückgezogen wird. Dabei kann der Stössel einen gleitverschieblichen Kern und am proximalen Ende des gleitverschieblichen Kerns eine Verlängerung aus einem Draht vorzugsweise einer Nickel-Titanlegierung oder aus einer Kunststoffseele aufweisen. Der Querschnitt der Verlängerung ist dabei dem Querschnitt des Obturationsstopfens angepasst.

In einer weiteren solchen Ausführungsform weist das Rückstellelement des Schiebemechanismus eine Schraubenfeder auf. Diese Schraubenfeder ist innerhalb eines rohrförmigen Bereichs des Gehäuses des Applikators angeordnet und stützt mit ihrem Proximalen Ende an einem verengten Absatz des Gehäuses ab. Das distale Ende der Schraubenfeder drückt gegen einen gleitverschieblichen Kern oder Stab des Schiebemechanismus.

Gemäß der Erfindung weist das Rückstellelement einen Faltenbalg auf. Dieser Faltenbalg ist am distalen Ende des Gehäuses angeordnet und wird von einer Druckplatte abgeschlossen, an die im Inneren des Gehäuses der gleitverschiebliche Kern oder Stab innerhalb des Gehäuses angeordnet ist. Anstelle eines Stabes kann hier auch bereits ein Draht oder eine Kunststoffseele als Kern an der Druckplatte fixiert sein, die mit ihren Querschnitten dem Querschnitt des Obturationsstopfens angepasst sind.

Durch Drücken auf die Druckplatte wird der Faltenbalg zusammengeschoben und gleichzeitig im Innern des Gehäuses das gleitverschiebliche Element in Form eines Stabes, eines Drahtes oder einer Kunststoffseele in Richtung auf das proximale Ende des Applikators verschoben und bei Entlastung der Druckplatte federt der Faltenbalg zurück und zieht gleichzeitig das an ihm im Innern des Gehäuses fixierte gleitverschiebliche Element in Richtung auf das distale Ende des Applikators. Die Faltenbalgkonstruktion ist besonders geeignet für den einmaligen Gebrauch, wobei das Gehäuse des Applikators einstückig in den Träger übergeht, der an seinem proximalen Ende in einem Mundstück mündet, das den Obturationsstopfen aufnehmen kann.

Ein weitere Vorteil der Erfindung ist es, dass das rohrförmige Gehäuse aus einem flexiblen schlauchartigen Material gebildet sein kann, in dem ein gleitverschieblicher Kern oder Stössel in Form eines Drahtes oder einer Kunststoffseele angeordnet ist.

Vorzugsweise steht der Schiebemechanismus des Applikators mit einer äußeren Messanzeige in Wirkverbindung, mit welcher die Wurzelkanaltiefe messbar ist und/oder die Position des Obturationsstopfens bestimmbar ist. Derartige Messanzeigen werden vorzugsweise dann angebracht, wenn der Applikator für einen mehrfachen Gebrauch vorgesehen ist. -

In einer weiteren bevorzugten Ausführungsform des Applikators weist dieser eine Stösselführung auf, die zum proximalen Ende hin gekrümmt ist. Diese Krümmung erleichtert das Einbringen der Stösselführung in den Wurzelkanal eines Zahnes, zumal aufgrund der Krümmung der Applikator in Richtung der Mundhöhle gehalten werden kann, während die Stösselführung durch die Krümmung in den Zahnwurzelkanal einführbar ist.

In einer weiteren bevorzugten Ausführungsform ist die Stösselführung aus einem flexiblen Material gefertigt. So kann die Krümmung flexibel dem jeweiligen zu füllenden Wurzelkanal angepasst werden. Besonders bevorzugt ist die aus einem flexiblen Material gefertigte Stösselführung zum proximalen Ende hin gekrümmt. Diese Krümmung erleichtert das Einbringen der Stösselführung in den Wurzelkanal, während die Flexibilität der Materials der Stösselführung es erlaubt, die Stösselführung vorteilhaft in den Wurzelkanal einzuführen. Indem die Stösselführung in den Wurzelkanal bis zu einer gewünschten Tiefe eingeführt wird, bevor eine Obturationsmasse oder ein Obturationsstift dadurch in den Wurzelkanal eingebracht wird, läßt sich sicherstellen, dass die Obturationsmasse oder der Obturationsstift in der gewünschten Tiefe und/oder in der gewünschten Position in den Wurzelkanal eingebracht wird.

In einer weiteren bevorzugten Ausführungsform der Erfindung weist der Applikator einen variablen Stopper auf, mit dem die Eindringtiefe des Obturationsstopfens in dem Wurzelkanal variabel voreinstellbar ist. Diese Funktion des Applikators ermöglicht, dass im Bereich der apikalen Öffnung Überdruck, Verletzungen und ein zu tiefes Eindringen in den Wurzelkanal vermieden werden. Darüber hinaus wird vermieden, dass ein zu weit in die apikale Öffnung eingeschobener Obturationsstopfen ein bleibendes unangenehmes Druckgefühl ausübt bzw. zu Komplikationen im apikalen Bereich führt.

In einer weiteren Ausführungsform der Erfindung weist der Applikator eine von außen sichtbare Skalierung auf, die mit dem Schiebemechanismus in Wirkverbindung ist und die aktuelle Eindringtiefe des Obturationsstopfens im Wurzelkanal anzeigt.

Diese Skalierung kann eine Feinteilung bis zu einem Viertelmillimeter aufweisen, um mit hoher Genauigkeit den Obturationsstopfen exakt zu setzen.

Zusammenfassend ist festzustellen, dass die erfindungsgemäße Obturationsvorrichtung sicher und einfach sowie zeitsparend angewendet werden kann. Sie garantiert eine sehr gute Verstopfung und Abdichtung der apikalen Öffnung eines Wurzelkanals in einem Zahn.

Die Erfindung wird nun anhand der beigefügten Figuren näher erläutert.
- Figur 1: zeigt einen schematischen Querschnitt durch einen nicht erfindungsgemäßen Applikator einer Obturationsvorrichtung;
- Figur 2: zeigt einen schematischen Querschnitt durch einen Träger der Obturationsvorrichtung gemäß Figur 1;
- Figur 3: zeigt eine schematische perspektivische Seitenansicht eines solchen Applikators einer Obturationsvorrichtung;
- Figur 4: zeigt eine schematische perspektivische Draufsicht des Applikators der Obturationsvorrichtung gemäß Figur 3;
- Figur 5: zeigt einen schematischen Querschnitt durch eine Einweg-Obturationsvorrichtung einer Ausführungsform der Erfindung;
- Figur 6: zeigt einen schematischen Querschnitt durch ein Mundstück der Einweg-Obturationsvorrichtung gemäß Figur 5.

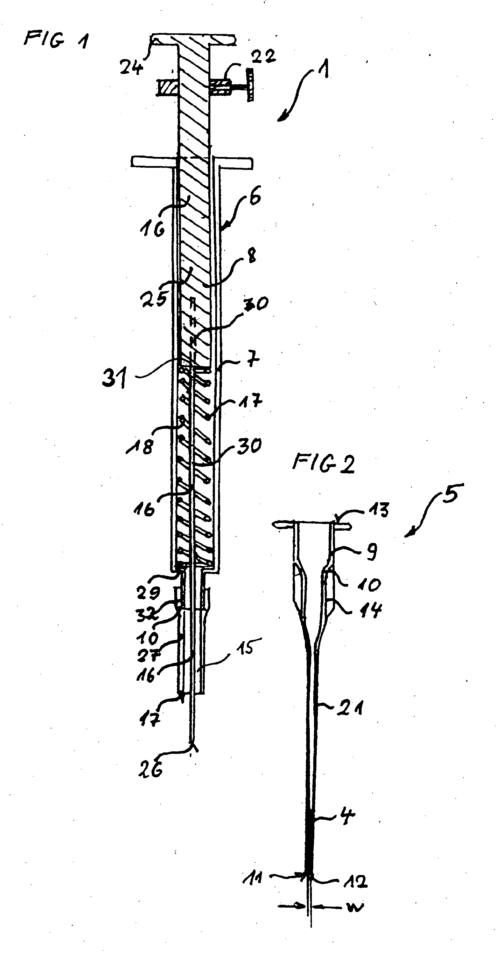

Figur 1 zeigt einen schematischen Querschnitt durch einen Applikator 6 einer Obturationsvorrichtung 1.

Der Applikator 6 weist ein langgestrecktes, rohrförmiges Gehäuse 7 auf, in dem ein Schiebemechanismus 8 angeordnet ist. Der Schiebemechanismus 8 wird vom distalen Ende aus über den Schieber 24 betätigt, an dem ein gleitverschieblicher Kern 25 angebracht ist, der im oberen Bereich des Gehäuses 7 bewegbar ist und außerhalb des Gehäuses 7 einen Stopper 22 aufweist, der verstellbar ist, so dass unterschiedliche Verschiebelängen möglich sind. Der Schiebemechanismus 8 weist proximal zu dem stabförmigen Kern 25 eine Schraubenfeder 18 als elastisches Rückstellelement 17 auf.

Die Schraubenfeder 18 stützt sich in Gehäuse 7 auf einen Gehäuseansatz 29 ab, der am proximalen Ende des Applikators 6 angeordnet ist und erstreckt sich bis zum proximalen Ende des gleitverschieblichen Kerns 25. Im Zentrum der Schraubenfeder 18 ist ein drahtförmige Verlängerung 30 angeordnet, die in dem proximalen Ende 31 des gleitverschieblichen Kerns 25 fixiert ist und aus dem proximalen Ende 15 des Applikators 6 herausragt. In dieser Ausführungsform bildet der gleitverschiebliche Kern mit Verlängerung einen Stössel 16.

Wird der Schieber 24 betätigt, so wird die Schraubenfeder 18 gespannt, bis der Stössel 16 mit seinem proximalen Ende 26 einen Obturationsstopfen entlang einem Wurzelkanal in die apikale Öffnung zum Verblocken eingeschoben hat. Das proximale Ende 32 des Gehäuses 7 weist einen Konus 10 auf, der von einem schlauchförmigen Anschlussstück 27 auf dem proximalen Ende 32 des Gehäuses 7 gebildet wird. Auf das schlauchförmige Anschlussstück 27 kann ein Träger aufgesteckt werden.

Figur 2 zeigt einen schematischen Querschnitt durch einen Träger 5 der Obturationsvorrichtung 1 gemäß Figur 1. Der Träger 5 weist an seinem distalen Ende 13 einen Konus 10 auf, der dem Konus 10 des in Figur 1 gezeigten Applikators 6 angepasst ist. Der Träger 5 kann mit seinem Verbindungsansatz 14 und der Steckverbindung 9 auf das proximale Ende 15 des in Figur 1 gezeigten Applikators 6 gesteckt werden. Der Steckverbindungsansatz 14 geht nach dem Konus 10 in eine Stösselführung 21 über, welche den in Figur 1 gezeigten Stössel 16 des Applikators 6 in Richtung auf ein Obturationsstopfenmaterial im Bereich des Mundstücks 12 führt.

Der Obturationsstopfen 4 in dieser Ausführungsform ist innerhalb des Trägers 5 am proximalen Ende 11 des Trägers 5 angeordnet, wobei die Kontur des Obturationsstopfens 4 der lichten Weite w des Mundstücks 12 des Trägers 5 angepasst ist. Nach einem Steckverbinden des distalen Endes 13 des Trägers 5 mit dem proximalen Endes 15 des Applikators 6 wird der Obturationsstopfen 4 aus Guttapercha-Material aus dem Mundstück 12 in Richtung auf die apikale Öffnung des Wurzelkanals herausgepresst.

Dabei wird die in Figur 1 gezeigte Schraubenfeder 18 im Applikator 6 gespannt und nach erfolgter Abdichtung der apikalen Öffnung des Wurzelkanals wirkt die Schraubenfeder 18 im Applikator 6 als Rückstellelement 17 und drückt den Schiebemechanismus 8 zurück in seine Ausgangsstellung. Der einmal in der apikalen Öffnung positionierte Obturationsstopfen 4 wird durch das Zurückfedern des Schiebemechanismus 8 nicht gelokkert und verschoben, so dass mit dieser Obturationsvorrichtung 1 ein Positionieren eines Abdichtstopfens in der apikalen Öffnung des Wurzelkanals erfolgreich durchgeführt werden kann.

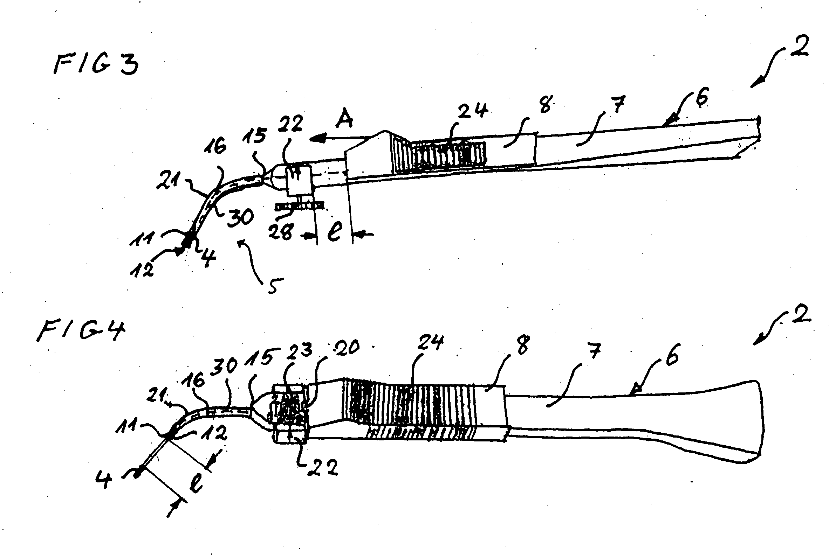

Figur 3 zeigt eine schematische perspektivische Seitenansicht einer Obturationsvorrichtung mit Applikators 6 und Träger 5. Komponenten mit gleichen Funktionen wie in den vorherigen Figuren werden mit gleichen Bezugszeichen gekennzeichnet und nicht extra erläutert. Ein Merkmal dieses Ausführungsbeispiels ist es, dass die Stösselführung 21 des Trägers 5 am proximalen Ende des Applikators 6 eine Krümmung aufweist. Dieses ermöglicht, den Applikator 6 in relativ waagerechter Ausrichtung in der Mundhöhle zu halten und dennoch in die Wurzelkanäle der Zähne mit dem Träger 5 einzudringen. Die gestrichelte Linie deutet die Verlängerung 30 des gleitverschieblichen Kerns des Stössels an, der mit dem Schiebemechanismus 8 in Wirkverbindung steht.

Der Schiebemechanismus 8 weist einen Schieber 24 auf, der von Hand betätigt werden kann. Der Schieber 24 gleitet in dieser Ausführungsform auf dem Gehäuse 7 in Pfeilrichtung A und bewegt im Innern des Gehäuses 7 den Stössel 16. Ein im Innern des Gehäuses und in dieser Zeichnung nicht sichtbares federelastisches Rückstellelement sorgt dafür, dass der Schieber 24 und der Stössel 16 in die hier gezeigte Grundposition zurückfedern.

Auch dieser Applikator 6 verfügt über einen variablen Stopper 22, der in eine beliebige Positionen mit Hilfe einer Fixierschraube 28 eingestellt und/oder verstellt werden kann, um eine vorbestimmte Eindringtiefe des Stössels 16 in den Wurzelkanal zu fixieren.

Figur 4 zeigt eine schematische perspektivische Draufsicht des Applikators 6 und des Trägers 5 der Obturationsvorrichtung 2 gemäß Figur 3. In dieser Draufsicht ist die Wirkungsweise des variablen Stoppers 22 sichtbar, da der Schieber nun bis zum Stopper 22 vorgeschoben ist, und der Stössel 16 um die gleiche Länge 1 aus der Stösselführung 21 hinausgeschoben ist. Darüber hinaus verfügt der Applikator 6 über eine Skalierung 23 mit Messanzeige 20, mit der diese Länge 1, welche der Eindringtiefe des Stössels 16 in den Wurzelkanal entspricht, präzise gemessen und eingestellt werden kann.

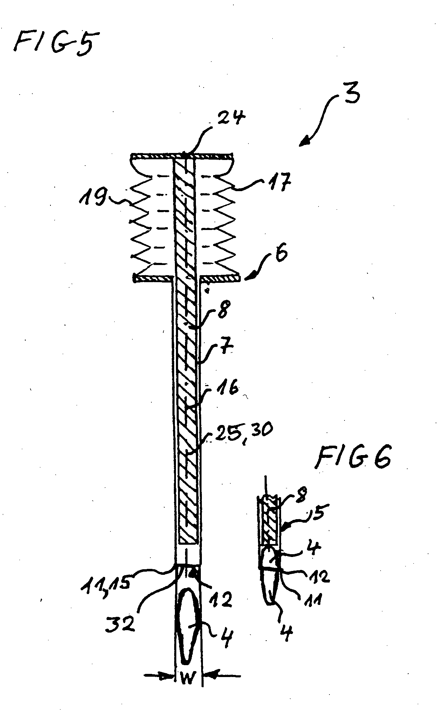

Figur 5 zeigt einen schematischen Querschnitt durch eine Einweg-Obturationsvorrichtung 3 zum einmaligen Gebrauch gemäß der Erfindung. Dabei bildet das Gehäuse 7 gleichzeitig den Träger 5 für den Obturationsstopfen 4 am proximalen Ende des Gehäuses 7. Der Stössel 16 wird in dem rohrförmigen Gehäuse 7 geführt und bildet gleichzeitig den gleitverschieblichen Kern 25. Das rohrförmige Gehäuse 7 kann auch ein flexibler Schlauch sein, der beispielsweise vorgekrümmt ist, in dem ein flexibler Draht den Stössel 16 bildet, oder in dem eine Kunststoffseele angeordnet ist und einen flexiblen Stössel 16 ausbildet.

Das proximale Ende 32 des Gehäuses 7 ist auch gleichzeitig das Mundstück 12 der Obturationsvorrichtung 3, das mit seiner lichten Weite w der Kontur eines Guttapercha-Obturationsstopfens 4 angepasst ist. Der Obturationsstopfen 4 weist in dieser Ausführungsform der Erfindung einen Doppelkonus auf, der an seinem proximalen Ende eine Spitze ausbildet und mit seinem distalen Ende an die lichte Weite w des Mundstücks 12 angepasst ist. Das distale Ende 33 des Applikators 6 weist den Schieber 24 auf, der über einen Faltenbalg 19 mit dem Gehäuse 7 verbunden ist. Der Faltenbalg 19 bildet gleichzeitig ein elastisches Rückstellelement 17, so dass nach dem Einpressen des Obturationsstopfens 4 in die apikale Öffnung des Wurzelkanals der Stössel 16 in die hier gezeigte Ausgangsstellung zurückfedert.

Figur 6 zeigt einen schematischen Querschnitt durch ein Mundstück 12 der Einweg-Obturationsvorrichtung 3 gemäß Figur 5. In das Mundstück 12, das gleichzeitig das proximale Ende 11 des Trägers 5 und auch das proximale Ende 15 des Applikators 6 bildet, ist in Figur 6 der Obturationsstopfen 4 eingeführt, um ihn über den Wurzelkanal zur apikalen Öffnung des Zahnes zu führen und mit dem Guttapercha-Obturationsstopfen 4 diese Öffnung abzudichten.

### Bezugszeichenliste

- 1: Obturationsvorrichtung
- 2: Obturationsvorrichtung
- 3: Einweg-Obturationsvorrichtung
- 4: Obturationsstopfen
- 5: Träger
- 6: Applikator
- 7: Gehäuse
- 8: Schiebemechanismus
- 9: Steckverbindung
- 10: Konus
- 11: proximales Ende des Trägers
- 12: Mundstück des Trägers
- 13: distales Ende des Trägers
- 14: Steckverbindungsansatz
- 15: proximales Ende des Applikators
- 16: Stössel
- 17: Rückstellelement
- 18: Schraubenfeder
- 19: Faltenbalg
- 20: Messanzeige
- 21: Stösselführung
- 22: variabler Stopper
- 23: Skalierung
- 24: Schieber
- 25: gleitverschieblicher Kern
- 26: proximales Ende des Stössels
- 27: schlauchförmiges Abschlussstück
- 28: Fixierschraube
- 29: Gehäuseansatz
- 30: Verlängerung
- 31: proximales Ende des Kerns
- 32: proximales Ende des Gehäuses
- 33: distales Ende des Applikators

- l: Länge
- w: Weite

## Patentansprüche

1. Obturationsvorrichtung zur Verblockung einer apikalen Öffnung eines Wurzelkanals eines Zahnes mittels einer Obturationsstopfenmasse, wobei die Obturationsvorrichtung (1) einen Träger (5) mit einer Obturationsstopfenmasse und einen Applikator (6) aufweist, mit dem die Obturationsstopfenmasse in die apikale Öffnung applizierbar ist, wobei der Applikator (6) ein Gehäuse (7) mit einem Schiebemechanismus (8) aufweist, der mit dem Träger (5) in Eingriff bringbar ist und mit dem die Obturationsstopfenmasse von dem Träger (5) in die apikale Öffnung schiebbar ist,
**dadurch gekennzeichnet, dass** die
Obturationsstopfenmasse Guttaperchaspitzen enthält oder aus Guttaperchaspitzen besteht und dass der Applikator einen Faltenbalg aufweist.

2. Obturationsvorrichtung nach Anspruch 1,
**dadurch gekennzeichnet, dass**
die Obturationsvorrichtung (1) eine Steck-, Schraub- und/oder Klebstoffverbindung zwischen Träger (5) und Applikator (6) aufweist, wobei bevorzugt
die Steckverbindung (9) einen Konus (10) aufweist.

3. Obturationsvorrichtung nach einem der vorhergehenden Ansprüche,
**dadurch gekennzeichnet, dass**
der Träger (5) an einem proximalen Ende (11) ein Mundstück (12) und an einem distalen Ende (13) einen Verbindungsansatz (14), der auf ein proximales Ende (15) des Applikators (6) aufsteckbar oder aufschraubbar ist, aufweist.

4. Obturationsvorrichtung nach einem der Ansprüche 1-3,
**dadurch gekennzeichnet, dass** die
Obturationsstopfenmasse einen vorgefertigten Obturationsstopfen (4) aufweist.

5. Obturationsvorrichtung nach Anspruch 4,
**dadurch gekennzeichnet, dass**
die lichte Weite (w) des Mundstücks (12) an die Außenmaße des Obturationsstopfens (4) angepasst ist.

6. Obturationsvorrichtung nach einem der vorhergehenden Ansprüche,
**dadurch gekennzeichnet, dass**
die Obturationsstopfenmasse (4) in dem Träger (5) angeordnet ist.

7. Obturationsvorrichtung nach Anspruch 6,
**dadurch gekennzeichnet, dass**
der Obturationsstopfen (4) eine zylindrische Kontur aufweist, oder
**dadurch gekennzeichnet, dass**
der Obturationsstopfen (4) einen konusförmigen Stopfen mit einer Steigung wahlweise von 4 % bis 10 % aufweist, oder
**dadurch gekennzeichnet, dass**
der Obturationsstopfen (4) eine stufenförmige Außenkontur aufweist.

8. Obturationsvorrichtung nach einem der vorhergehenden Ansprüche,
mit einer Messanzeige (20), mit welcher der Schiebemechanismus (8) des Applikators (6) in Wirkverbindung steht, und mit welcher die Wurzelkanaltiefe messbar ist und/oder die Position des Obturationsstopfens (4) bestimmbar ist.

9. Obturationsvorrichtung nach einem der vorhergehenden Ansprüche,
**dadurch gekennzeichnet, dass**
der Träger (6) eine Stösselführung (21) aufweist, die zum proximalen Ende (15) hin gekrümmt ist.

10. Obturationsvorrichtung nach einem der vorhergehenden Ansprüche,
**dadurch gekennzeichnet, dass**
der Applikator (6) einen variablen Stopper (22) aufweist, mit dem die Eindringtiefe des Obturationsstopfens (4) in dem Wurzelkanal variabel einstellbar ist.

11. Obturationsvorrichtung nach einem der vorhergehenden Ansprüche,
**dadurch gekennzeichnet, dass**
der Applikator (6) eine von außen sichtbare Skalierung (23) aufweist, die mit dem Schiebemechanismus (8) in Wirkverbindung steht und die aktuelle Eindringtiefe des Obturationsstopfens (4) im Wurzelkanal anzeigt.

12. Obturationsvorrichtung nach einem der vorhergehenden Ansprüche,
**dadurch gekennzeichnet, dass**
der Schiebemechanismus (8) des Applikators (6) einen Schieber (24) aufweist, der mit einem gleitverschieblichen Kern (25) innerhalb des Applikators (6) in Wirkverbindung steht und auf den Obturationsstopfen (4) einwirkt.

13. Obturationsvorrichtung nach einem der vorhergehenden Ansprüche,
**dadurch gekennzeichnet, dass**
die Obturationsvorrichtung (3) für einen einmaligen Gebrauch vorgesehen ist, oder
**dadurch gekennzeichnet, dass**
der Träger (5) und/oder der Applikator (6) für einen einmaligen Gebrauch vorgesehen sind.

## Claims

1. Obturation device for blocking an apical foramen of a root canal of a tooth by means of an obturation plugging mass, the obturation device (1) having a carrier (5) with an obturation plugging mass and having an applicator (6), by means of which the obturation plugging mass is applicable to the apical foramen, the applicator (6) having a housing (7) with a pushing mechanism (8), which mechanism is arranged to be brought into engagement with the carrier (5) and by means of which the obturation plugging mass can be pushed from the carrier (5) into the apical foramen,
**characterised in that** the obturation plugging mass comprises gutta-percha points or consists of guttapercha points and that the applicator has a bellows.

2. Obturation device according to claim 1,
**characterised in that**
the obturation device (1) has a push-in, screwed and/or adhesive connection between the carrier (5) and the applicator (6), wherein preferably the push-in connection (9) has a cone (10).

3. Obturation device according to one of the preceding claims,
**characterised in that**
the carrier (5) has, at a proximal end (11), a nozzle (12) and, at a distal end (13), a connection projection (14), which can be push-mounted or screw-mounted on a proximal end (15) of the applicator (6).

4. Obturation device according to one of claims 1-3,
**characterised in that**
the obturation plugging mass comprises a prefabricated obturation plug (4).

5. Obturation device according to claim 4,
**characterised in that**
the clear width (w) of the nozzle (12) is matched to the external dimensions of the obturation plug (4).

6. Obturation device according to one of the preceding claims,
**characterised in that**
the obturation plugging mass (4) is arranged in the carrier (5).

7. Obturation device according to claim 6,
**characterised in that**
the obturation plug (4) has a cylindrical contour, or
**characterised in that**
the obturation plug (4) comprises a conical plug having a slope, as desired, from 4 % to 10 %, or
**characterised in that**
the obturation plug (4) has a step-shaped external contour.

8. Obturation device according to one of the preceding claims,
having a measurement display (20), by means of which the pushing mechanism (8) of the applicator (6) is in operative connection and by means of which the depth of the root canal can be measured and/or the position of the obturation plug (4) can be determined.

9. Obturation device according to one of the preceding claims,
**characterised in that**
the carrier (6) has a ram guide means (21) which is curved towards the proximal end (15).

10. Obturation device according to one of the preceding claims,
**characterised in that**
the applicator (6) has a variable stop (22), by means of which the depth of penetration of the obturation plug (4) in the root canal is variably settable.

11. Obturation device according to one of the preceding claims,
**characterised in that**
the applicator (6) has a scale arrangement (23), visible from the outside, which is in operative connection with the pushing mechanism (8) and which indicates the current depth of penetration of the obturation plug (4) in the root canal.

12. Obturation device according to one of the preceding claims,
**characterised in that**
the pushing mechanism (8) of the applicator (6) has a slider (24), which is in operative connection with a slidingly displaceable core (25) inside the applicator (6) and which acts on the obturation plug (4).

13. Obturation device according to one of the preceding claims,
**characterised in that**
the obturation device (3) is intended for single use, or
**characterised in that**
the carrier (5) and/or the applicator (6) is/are intended for single use.

## Revendications

1. Dispositif d'obturation pour le blocage d'une ouverture apicale d'un canal radiculaire d'une dent au moyen d'une masse de comblement pour l'obturation, le dispositif d'obturation (1) présentant un support (5) comportant une masse de comblement pour l'obturation et un applicateur (6), avec lequel la masse de comblement pour l'obturation est applicable dans l'ouverture apicale, l'applicateur (6) présentant un boîtier (7) comportant un mécanisme poussoir (8) qui peut être mis en prise avec le support (5) et avec lequel la masse de comblement pour l'obturation peut être poussée par le support (5) dans l'ouverture apicale, **caractérisé en ce que** la masse de comblement pour l'obturation contient des pointes de gutta-percha ou est composée de pointes de guttapercha et **en ce que** l'applicateur présente un soufflet.

2. Dispositif d'obturation selon la revendication 1, **caractérisé en ce que**,
le dispositif d'obturation (1) présente un raccord par emboîtement, un raccord par vissage et/ou un raccord collé entre le support (5) et l'applicateur (6), le raccord par emboitement (9) présentant de préférence un cône (10).

3. Dispositif par obturation selon l'une des revendications précédentes, **caractérisé en ce que**
le support (5) présente à une extrémité proximale (11) un embout buccal (12) et à une extrémité distale (13), une pièce de raccordement (14) qui peut être emboitée ou vissée sur une extrémité proximale (15) de l'applicateur (6).

4. Dispositif d'obturation selon l'une des revendications 1 à 3, **caractérisé en ce que**
la masse de comblement pour l'obturation présente un tampon d'obturation (4) préfabriqué.

5. Dispositif d'obturation selon la revendication 4, **caractérisé en ce que**
la largeur libre (w) de l'embout buccal (12) est adaptée à la masse extérieure du tampon d'obturation (4).

6. Dispositif d'obturation selon l'une des revendications précédentes, **caractérisé en ce que**
la masse de comblement pour l'obturation (4) est disposée dans le support (5).

7. Dispositif d'obturation selon la revendication 6, **caractérisé en ce que**
le tampon d'obturation (4) présente un contour cylindrique, ou
**caractérisé en ce que**,
le tampon d'obturation (4) présente un tampon conique comportant un pas de 4 à 10 % optionnellement, ou
**caractérisé en ce que** le tampon d'obturation (4) présente un contour extérieur formant des paliers.

8. Dispositif d'obturation selon l'une des revendications précédentes, comportant une jauge (20) avec laquelle le mécanisme poussoir (8) de l'applicateur (6) est en relation fonctionnelle et avec laquelle la profondeur du canal radiculaire peut être mesurée et/ou la position du tampon d'obturation (4) peut être déterminée.

9. Dispositif d'obturation selon l'une des revendications précédentes, **caractérisé en ce que**
le support (6) présente un guidage de coulisseau (21) qui est courbé vers l'extrémité proximale (15).

10. Dispositif d'obturation selon l'une des revendications précédentes, **caractérisé en ce que**
l'applicateur (6) présente un arrêt variable (22) avec lequel la profondeur de pénétration du tampon d'obturation (4) dans le canal radiculaire peut être ajustée de façon variable.

11. Dispositif d'obturation selon l'une des revendications précédentes, **caractérisé en ce que**
l'applicateur (6) présente une graduation (23) visible de l'extérieur qui est en relation fonctionnelle avec le mécanisme poussoir (8) et indique la profondeur de pénétration effective du tampon d'obturation (4) dans le canal radiculaire.

12. Dispositif d'obturation selon l'une des revendications précédentes, **caractérisé en ce que**
le mécanisme poussoir (8) de l'applicateur (6) présente un poussoir (24) qui est en relation fonctionnelle avec une âme (25) coulissante à l'intérieur de l'applicateur (6) et agit sur le tampon d'obturation (4).

13. Dispositif d'obturation selon l'une des revendications précédentes, **caractérisé en ce que**
le dispositif d'obturation (3) est prévu pour une utilisation unique, ou **caractérisé en ce que**
le support (5) et/ou l'applicateur (6) sont prévus pour une utilisation unique.
